# FASCICULE DE BREVET EUROPEEN

(11) **EP 4 568 849 B1**
(45) Date de publication et mention de la délivrance du brevet: **21.10.2026**
(21) Numéro de dépôt: 23731141.0
(22) Date de dépôt: 31.05.2023
(51) Int. Cl.: B60K 35/00, B60K 35/10, B60K 35/22, B60K 35/81, B60K 37/10

(54) **ÉQUIPEMENT INTÉRIEUR POUR VÉHICULE AUTOMOBILE AVEC UN MODULE LUMINEUX À NAPPE DE GUIDAGE FLEXIBLE**
INNENAUSSTATTUNG FÜR KRAFTFAHRZEUG MIT EINEM LICHTMODUL MIT FLEXIBLEM, FLACHEM LICHTLEITER
INTERIOR TRIM ELEMENT FOR MOTOR VEHICLE WITH A LIGHT MODULE WITH FLEXIBLE FLAT LIGHT GUIDE

(30) Priorité: 31.05.2022 FR 2205240
(43) Date de publication de la demande: 18.06.2025
(73) Titulaire: VALEO VISION, 93012 Bobigny Cedex (FR)
(72) Inventeur: ALVEAR, Eduardo, 93012 BOBIGNY Cedex (FR); BEDDAR, Sidahmed, 93012 BOBIGNY Cedex (FR); EL-IDRISSI, Hafid, 93012 BOBIGNY Cedex (FR); DELANDE, Benoit, 93012 BOBIGNY Cedex (FR)
(74) Mandataire: Valeo Visibility
(86) Numéro de dépôt international: PCT/EP2023/064617
(87) Numéro de publication internationale: WO 2023/232908

(56) Documents cités:
- DE-A1- 102018 113 369
- DE-A1- 102018 208 284
- US-A1- 2011 277 361

## Description

La présente invention se rapporte au domaine des modules lumineux d'un équipement intérieur pour véhicule automobile, notamment de modules lumineux à guide de lumière. L'invention s'applique en particulier, mais non exclusivement, à l'affichage de motifs lumineux sur un équipement intérieur pour véhicule automobile.

Il est désormais courant d'afficher des motifs lumineux à l'intérieur d'un véhicule automobile, à des fins de signalisation d'informations, dans un but esthétique de personnalisation ou de création d'ambiance.

Il est en outre préférable d'afficher de tels motifs avec un niveau de résolution élevé.

Pour ce faire, il est connu d'utiliser des écrans, tels que des écrans LCD.

Toutefois, une telle technologie est non seulement coûteuse mais également sensible aux conditions environnementales telles que la température, l'humidité ou le rayonnement UV.

Qui plus est, il est préférable de disposer d'un module lumineux flexible afin de faciliter son intégration dans toute type d'équipement. C'est notamment le cas à l'intérieur d'un véhicule automobile, dans lequel les équipements intérieurs présentent des surfaces non planes.

Des contraintes d'encombrement importantes s'appliquent par ailleurs à l'intérieur d'un véhicule automobile, et il importe de prévoir des modules lumineux qui présentent une bonne compacité.

Enfin, les solutions précitées présentent l'inconvénient d'une grande consommation d'énergie, d'autant plus importante que la surface de l'équipement dans lequel on souhaite intégrer un module lumineux est grande.

Il existe donc un besoin de disposer d'un équipement intérieur pour véhicule automobile comprenant un module lumineux apte à afficher un motif lumineux précis, et étant robuste, peu cher, consommant peu d'énergie, compact et facile à intégrer.

La présente invention vient améliorer la situation.

A cet effet un premier aspect de l'invention concerne un équipement intérieur pour véhicule automobile, l'équipement comprenant une surface externe sur laquelle est agencé un module lumineux, le module lumineux comprenant :
un ensemble d'au moins une nappe de guidage flexible, chaque nappe de guidage flexible de l'ensemble étant apte à recevoir des rayons lumineux par au moins un bord de ladite nappe de guidage flexible et à renvoyer les rayons lumineux dans une direction sensiblement normale à une surface de la nappe de guidage flexible selon au moins un motif gravé dans ladite nappe de guidage flexible ;
au moins un élément d'injection de lumière apte à recevoir de la lumière et à distribuer la lumière dans l'ensemble d'au moins une nappe de guidage flexible ;
au moins une source de lumière apte à injecter de la lumière dans ledit au moins un élément d'injection de lumière.

L'utilisation d'une nappe de guidage flexible permet de faciliter l'intégration du module lumineux dans un équipement intérieur pour véhicule automobile, et présente en outre une bonne compacité, puisque le module lumineux peut présenter une faible épaisseur. En outre, il est rendu possible d'éclairer des surfaces importantes tout en limitant le nombre de sources de lumière utilisées.

Selon des modes de réalisation, l'équipement intérieur peut comprendre en outre une couche tactile apte à recevoir une entrée tactile d'un utilisateur, et la couche tactile peut être située entre la surface externe de l'équipement et le module lumineux, ou sous la surface externe de l'équipement.

Ainsi, le module lumineux peut être couplé avec une couche tactile pour recevoir des entrées tactiles de l'utilisateur du véhicule, ce qui optimise l'utilisation de l'espace contraint de l'intérieur d'un véhicule automobile.

En complément, la couche tactile peut être une couche capacitive.

De telles couches capacitives présentent une bonne résistance aux chocs.

Selon des modes de réalisation, l'équipement intérieur peut comprendre en outre un élément de contrôle apte à contrôler ladite au moins une source de lumière.

Il est ainsi rendu possible de piloter la source de lumière et d'ainsi faire varier le motif affiché par le module lumineux. Des animations lumineuses ou des informations dynamiques peuvent ainsi être affichées.

En complément, l'élément de contrôle peut être apte à recevoir des données d'entrée tactile de la couche tactile et peut être configuré pour contrôler ladite au moins une source de lumière en fonction des données d'entrée tactile.

Ainsi, la couche tactile est utilisée pour piloter l'affichage du motif du module lumineux, ce qui permet à l'utilisateur d'avoir un retour lumineux sur ses entrées tactiles.

En complément, le module lumineux peut être apte à afficher au moins un symbole dans une zone donnée du module lumineux à partir du motif de chaque nappe de guidage flexible de l'ensemble, et une zone tactile de la couche tactile en regard de la zone donnée du module lumineux peut être apte à recevoir une entrée tactile pour générer des données d'entrée tactile en fonction de ladite zone tactile.

Ainsi, il est facilité pour l'utilisateur de réaliser des entrées tactiles précises, puisqu'un retour lumineux est assuré dans la zone tactile où l'entrée tactile est réalisée.

En complément, le module lumineux peut être apte à afficher au moins un premier symbole dans une première zone donnée du module lumineux et au moins un deuxième symbole dans une deuxième zone donnée du module lumineux, à partir du motif de chaque nappe de guidage flexible de l'ensemble, et une première zone tactile de la couche tactile peut être en regard de la première zone donnée du module lumineux et une deuxième zone tactile de la couche tactile peut être en regard de la deuxième zone donnée du module lumineux, une première donnée d'entrée tactile peut être générée par la couche tactile sur réception d'une première entrée tactile dans la première zone tactile, et une deuxième donnée d'entrée tactile peut être générée par la couche tactile sur réception d'une deuxième entrée tactile dans la deuxième zone tactile.

Ainsi, plusieurs entrées tactiles différentes peuvent être réalisées par l'utilisateur via un même équipement, ce qui permet la réalisation de fonctionnalités plus complexes.

Selon des modes de réalisation, le module lumineux peut comprendre une nappe de guidage flexible, un élément d'injection de lumière et une source de lumière, la source de lumière peut être apte à projeter de la lumière dans un premier intervalle de longueurs d'onde et dans un deuxième intervalle de longueurs d'onde distinct du premier intervalle, ledit élément de contrôle étant apte à contrôler la source de lumière pour projeter de la lumière dans le premier intervalle ou dans le deuxième intervalle.

Ainsi, l'équipement est apte à être contrôlé dynamiquement pour faire varier la couleur du motif projeté.

En complément, l'élément de contrôle peut être apte à contrôler la source de lumière pour projeter de la lumière dans le premier intervalle ou dans le deuxième intervalle en fonction d'une commande d'animation.

Des animations lumineuses d'ambiance ou des informations dynamiques peuvent ainsi être affichées.

En complément ou en variante, l'élément de contrôle peut être apte à contrôler la source de lumière pour projeter de la lumière dans le premier intervalle ou dans le deuxième intervalle en fonction des données d'entrée tactile.

Ainsi, la couleur du motif dépend de l'entrée tactile de l'utilisateur, ce qui permet d'enrichir les interactions permises avec l'utilisateur.

Selon un premier mode de réalisation ou un deuxième mode de réalisation, le module lumineux peut comprendre une unique nappe de guidage flexible.

Ainsi, un module lumineux simple et peu coûteux peut être utilisé tout en affichant un motif lumineux sur une surface importante et potentiellement non plane.

En variante, selon le deuxième mode de réalisation ou selon un troisième ou quatrième mode de réalisation, le module lumineux peut comprendre un premier élément d'injection et un deuxième élément d'injection, ladite au moins une source peut être apte à sélectivement injecter de la lumière dans le premier élément d'injection et dans le deuxième élément d'injection, et le premier élément d'injection de lumière et l'ensemble d'au moins une nappe de guidage flexible peuvent être agencés de manière à projeter de la lumière selon le premier motif et dans lequel le deuxième élément d'injection de lumière et l'ensemble d'au moins une nappe de guidage flexible sont agencés de manière à projeter de la lumière selon le deuxième motif.

Ainsi, le premier élément d'injection et le deuxième élément d'injection peuvent être utilisés séparément, ce qui rend possible des animations par variation de couleur ou par variation spatiale des rayons lumineux émis par l'ensemble.

En complément, le module lumineux de l'équipement intérieur peut comprendre une première source de lumière apte à injecter de la lumière dans le premier élément d'injection de lumière et une deuxième source de lumière apte à injecter de la lumière dans le deuxième élément d'injection de lumière.

Le contrôle d'un affichage dynamique est ainsi rendu permis par le pilotage des sources, dont les activations respectives sont indépendantes l'une de l'autre.

Encore en complément, la première source de lumière peut être apte à générer de la lumière dans un premier intervalle de longueurs d'onde et la deuxième source de lumière peut être apte à générer de la lumière dans un deuxième intervalle de longueurs d'onde, différent du premier intervalle.

Il est ainsi rendu possible de faire varier la couleur du ou des motifs affichés, de manière dynamique.

Selon le deuxième mode de réalisation, le premier élément d'injection peut être agencé de manière à injecter de la lumière dans une première section du bord de la nappe de guidage de l'ensemble, et le deuxième élément d'injection peut être agencé de manière à injecter de la lumière dans une deuxième section du bord de la nappe de guidage flexible, une première partie de la nappe de guidage flexible située en regard de la première section du bord étant gravée selon le premier motif, et une deuxième partie de la nappe de guidage flexible située en regard de la deuxième section du bord étant gravée selon le deuxième motif.

Ainsi, il est rendu possible de réaliser plusieurs motifs à des positions spatiales distinctes, via une unique nappe de guidage flexible, ce qui limite les coûts et l'encombrement associés au module lumineux.

En variante, selon les troisième et quatrième modes de réalisation, l'ensemble peut comprendre au moins une première et une deuxième nappes de guidage flexibles, le premier motif étant gravé dans la première nappe de guidage flexible et le deuxième motif étant gravé dans la deuxième nappe de guidage flexible, le premier élément d'injection étant agencé de manière à injecter de la lumière dans un bord de la première nappe de guidage flexible et le deuxième élément d'injection étant agencé de manière à injecter de la lumière dans un bord de la deuxième nappe de guidage flexible.

Il est ainsi rendu possible de réaliser des variations complexes de motifs et/ou de prévoir un module lumineux couvrant une surface d'éclairage de grande dimension.

En complément, selon le troisième mode de réalisation, les première et deuxième nappes de guidage peuvent être superposées dans le module lumineux, afin de projeter les premier et deuxième motifs dans une zone commune du module lumineux.

Il est ainsi rendu possible de faire varier le motif projeté dans la zone commune. Une animation peut être réalisée en faisant varier dynamiquement le motif de la zone commune ou en changeant sa couleur.

En outre, les nappes de guidage flexibles étant fines, elles peuvent être superposées sans induire un encombrement important, ce qui est particulièrement avantageux dans des environnements contraints tel que l'intérieur d'un véhicule automobile.

En variante, selon le quatrième mode de réalisation de l'invention, les première et deuxième nappes de guidage peuvent être placées l'une à côté de l'autre de manière à projeter les premier et deuxième motifs à des positions distinctes.

Il est ainsi rendu possible de couvrir des surfaces d'émission de grande taille, notamment supérieures à 100 cm2, tout en permettant l'intégration sur des surfaces irrégulières et complexes.

En complément, le module lumineux de l'équipement intérieur peut comprendre plus de deux nappes de guidage flexibles placées les unes à côté des autres de manière à former une matrice de nappes de guidage flexibles, chaque nappe de guidage flexible étant associée à un élément d'injection de lumière apte à injecter de la lumière dans un bord de la nappe de guidage flexible et chaque nappe de guidage flexible ayant au moins un motif gravé dans ladite nappe.

Il est ainsi rendu possible de réaliser des animations lumineuses complexes par variation spatiale des rayons lumineux projetés, tout en permettant une intégration facilitée dans des équipements avec des surfaces complexes.

En complément dans le quatrième mode de réalisation, les nappes de guidage flexibles de l'ensemble peuvent avoir une même forme carrée ou rectangulaire.

La fabrication du module lumineux est ainsi simplifiée et les coûts associés sont réduits.

En complément dans le quatrième mode de réalisation, une dimension de la forme des nappes de guidage peut être comprise entre 3 et 25 cm, notamment entre 3 et 5 centimètres.

Ainsi, les éléments matriciels que sont les nappes de guidage flexibles sont de taille réduite, ce qui rend possible la réalisation d'un module lumineux avec un grand nombre de nappes de guidage flexibles. Cela permet d'afficher de nombreux motifs et donc de réaliser des animations lumineuses complexes.

En complément, selon le deuxième, troisième ou quatrième mode de réalisation, l'élément de contrôle peut être apte à contrôler ladite au moins une source afin de projeter sélectivement de la lumière selon le premier motif et selon le deuxième motif.

Ainsi, un unique élément est apte à piloter l'injection de lumière sélectivement dans les différents éléments d'injection de lumière du module lumineux, ce qui améliore la synchronisation de l'affichage des motifs lumineux les uns par rapport aux autres.

En complément, l'élément de contrôle peut être apte à contrôler dynamiquement ladite au moins une source de manière à réaliser une animation lumineuse comprenant au moins les premier et deuxième motifs.

La réalisation d'animations lumineuses à partir des motifs est ainsi facilitée.

Selon les modes de réalisation de l'invention, l'équipement intérieur peut être un tableau de bord de véhicule automobile.

Il est ainsi rendu possible d'afficher des informations ou de créer une ambiance lumineuse pour des passagers avant du véhicule. Il est particulièrement important de diffuser des informations au conducteur, voire de permettre des interactions avec ce dernier. Qui plus est, un tableau de bord comprend des surfaces non planes, et l'utilisation d'un module lumineux à nappe de guidage flexible est ainsi particulièrement avantageux.

En complément, le tableau de bord peut comprendre un dispositif gonflable de sécurité sous la surface externe du tableau de bord.

Le module lumineux comprenant une nappe de guidage flexible, il est aisément déformable ou déchirable, ce qui permet le déploiement du dispositif gonflable de sécurité en cas de choc. Les deux fonctions d'éclairage/signalisation et de sécurité peuvent ainsi être intégrées dans le même équipement.

En variante, l'équipement intérieur peut être un siège pour véhicule automobile, un toit pour véhicule automobile ou une plage arrière pour véhicule automobile.

Ces équipements peuvent tous présenter des surfaces non planes et/ou imposer des contraintes de compacité importantes.

Selon les modes de réalisation de l'invention, chaque nappe de guidage flexible de l'ensemble peut avoir une épaisseur comprise entre 0,2 et 1mm.

Une telle épaisseur permet une flexibilité importante de la nappe de guidage flexible, et facilite son intégration, notamment sur des supports incurvés.

Selon les modes de réalisation de l'invention, au moins une nappe de guidage flexible de l'ensemble peut être en un matériau transparent.

Ainsi, les possibilités d'intégration du module lumineux sont augmentées, ainsi que son aspect esthétique. A noter qu'au moins l'une des nappes de guidage flexibles peut être semi-transparente ou opaque.

En complément, chaque nappe de guidage flexible de l'ensemble peut comprendre un film en polycarbonate, PC, en polyméthacrylate de méthyle, PMMA en polyuréthane thermoplastique, TUP, ou en polytéréphtalate d'éthylène, PET.

De tels matériaux permettent de réaliser une nappe de guidage flexible et transparente.

Selon les modes de réalisation de l'invention, chaque nappe de guidage flexible peut comprendre un film comprenant des microstructures, dans lequel chaque motif parmi les premier et deuxième motifs sont gravés par impression ultra-violet des microstructures du film.

De telles microstructures permettent de réaliser des motifs de bonne résolution tout en gardant un niveau de transparence élevé de la nappe de guidage flexible.

En complément, pour chaque nappe de guidage flexible, une densité surfacique de microstructures peut diminuer avec la distance depuis le bord de la nappe de guidage dans laquelle est injectée la lumière.

L'homogénéité d'un motif projeté par la nappe de guidage flexible est ainsi améliorée.

Selon les modes de réalisation de l'invention, chaque élément d'injection peut comprendre une pluralité de guides d'injection, chaque guide d'injection étant apte à recevoir de la lumière d'une extrémité du guide et à guider la lumière à une position longitudinale donnée de l'élément d'injection, les positions longitudinales des guides d'injection étant toutes différentes de manière à distribuer la lumière longitudinalement dans l'élément d'injection.

Ainsi, il est permis de distribuer de manière homogène de la lumière dans le bord de la nappe de guidage flexible, ce qui améliore la qualité de projection des premier et deuxième motifs.

D'autres caractéristiques et avantages de l'invention apparaîtront à l'examen de la description détaillée ci-après, et des dessins annexés sur lesquels :
[Fig.1] illustre un module lumineux d'un équipement intérieur pour véhicule automobile, selon un premier mode de réalisation de l'invention;
[Fig.2] illustre un élément d'injection d'un module lumineux selon un mode de réalisation de l'invention;
[Fig.3] illustre un module lumineux d'un équipement intérieur pour véhicule automobile, selon un deuxième mode de réalisation de l'invention;
[Fig.4] illustre un module lumineux d'un équipement intérieur pour véhicule automobile, selon un troisième mode de réalisation de l'invention;
[Fig.5] illustre un module lumineux d'un équipement intérieur pour véhicule automobile, selon un quatrième mode de réalisation de l'invention;
[Fig.6] illustre un équipement pour véhicule automobile selon des modes de réalisation de l'invention

La description se concentre sur les caractéristiques qui démarquent l'équipement intérieur et le module lumineux de ceux connus dans l'état de l'art.

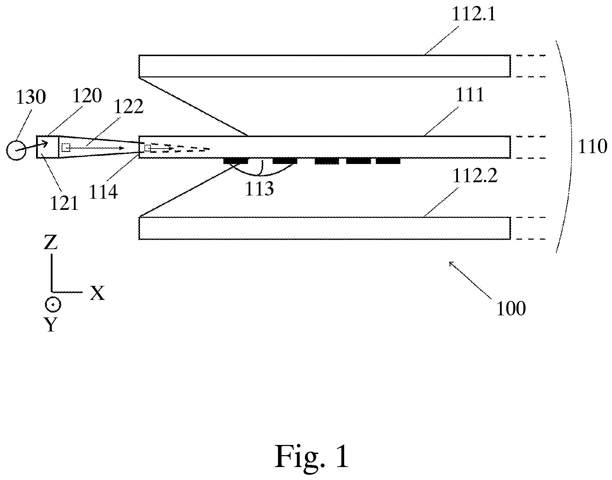

La [Fig.1] présente un module lumineux 100 d'un véhicule automobile, selon un premier mode de réalisation de l'invention.

Le module lumineux 100 comprend une nappe de guidage flexible 110 apte à recevoir des rayons lumineux par un bord 114 et à renvoyer les rayons lumineux dans une direction Z sensiblement normale à une surface de la nappe de guidage flexible qui s'étend ainsi dans un plan X-Y sur la [Fig.1].

On entend par nappe de guidage un élément de guidage optique dont l'une des dimensions est très inférieure aux deux autres dimensions dans l'espace, par exemple inférieure d'un ou plusieurs ordres de grandeur. Comme illustré sur la [Fig.1], on considère ici une nappe de guidage flexible dont l'épaisseur selon l'axe Z est inférieure d'au moins deux ordres de grandeur à ses dimensions selon le plan X-Y dans lequel la nappe de guidage flexible 110 s'étend.

La nappe de guidage flexible 110 peut comprendre un film flexible 111 en son coeur comprenant au moins un bord 114, étant apte à guider les rayons lumineux selon une direction globale X, et comprenant un ensemble de microstructures 113 aptes à renvoyer les rayons lumineux guidés dans le film flexible 111 en dehors de la nappe de guidage flexible 110, notamment dans une ou plusieurs directions sensiblement selon l'axe Z.

Le film flexible 111 peut être un film de substrat en polycarbonate, PC, en polyméthacrylate de méthyle, PMMA, en polyuréthane thermoplastique, TUP, ou en polytéréphtalate d'éthylène, PET. Le film flexible 111 peut avoir une épaisseur, soit une dimension selon l'axe Z, comprise entre 12 et 1000 micromètres. Plus précisément, l'épaisseur du film flexible 111 peut être comprise entre 50 et 1000 micromètres, par exemple entre 200 et 500 micromètres. En variante, c'est la nappe de guidage flexible 110 qui a une épaisseur comprise entre 200 et 1000 micromètres.

Les matériaux précités, associés à une épaisseur faible comme décrite ci-dessus, permettent l'obtention d'un film flexible 111. D'autres matériaux peuvent être prévus pour la composition du film flexible 111. Il est toutefois préférable selon l'invention de prévoir des matériaux déformables et transparents.

Un revêtement fin de microstructures 113 peut être rapporté sur l'une des faces du film flexible 111, ou être intégré dans le film flexible 111. Le revêtement de microstructures 113 peut notamment avoir une épaisseur selon l'axe Z inférieure à 20 micromètres.

De telles microstructures 113 peuvent avoir une forme générale de bosse, sur laquelle les rayons lumineux se réfléchissent dans une direction sensiblement selon l'axe Z. De telles microstructures 113 peuvent être aptes à ce que les rayons lumineux sortant du film flexible 111 forment un motif. A cet effet, les microstructures 113 peuvent être gravées par impression ultraviolet, selon le motif souhaité.

On entend par microstructures 113, des structures, ou irrégularités du film flexible, dont les dimensions sont inférieures à quelques micromètres. Les microstructures couvrent ainsi également des structures nanométriques. De telles tailles de microstructures 113 permettent d'assurer une transparence élevée du film flexible 111. En particulier, une transparence de l'ordre de 97% peut être obtenue en pratique par l'utilisation de microstructures 113. En variante, la nappe de guidage flexible peut être semi-transparente ou opaque.

Avantageusement, les microstructures 113 peuvent être réparties selon l'axe X de manière à ce qu'une densité linéique de microstructures 113 soit proportionnelle à la distance par rapport au bord 114 par laquelle sont reçus les rayons lumineux injectés par l'élément d'injection 120. Autrement dit, plus les microstructures 113 sont éloignées du bord 114, plus elles sont densément regroupées. Une telle répartition permet avantageusement d'assurer une répartition homogène selon l'axe X de l'intensité lumineuse du motif émis par la nappe de guidage flexible 110.

La nappe de guidage flexible 110 peut comprendre en outre une ou deux couches de protection 112.1 et 112.2 optionnelles, qui permettent de protéger mécaniquement le film flexible 111. En outre, l'une des couches de protection 112.1 et 112.2 au moins peut comprendre un traitement anti-UV, permettant de protéger le film flexible contre les rayons UV, une fois que les microstructures 113 ont été gravées. Sans une telle protection UV, le motif projeté par la nappe de guidage flexible 110 est susceptible de se dégrader avec le temps, notamment lorsqu'il est exposé aux rayons du soleil.

Le film flexible 111 et les couches de protection 112.1 et 112.2 sont représentées de manière espacée sur la [Fig.1], à titre illustratif uniquement. On comprendra toutefois que les couches de protection 112.1 et 112.2 peuvent être accolées au film flexible, par laminage notamment.

La nappe de guidage 110 étant flexible, elle n'est pas nécessairement comprise dans un plan mais peut être incurvée, selon la position dans laquelle elle est placée et les contraintes mécaniques qui lui sont appliquées.

Le module lumineux 100 illustré sur la [Fig.1] comprend également un élément d'injection de lumière 120, aussi appelé barre de lumière, car s'étendant longitudinalement selon une direction Y, et apte à injecter de la lumière selon une direction normale à sa direction longitudinale, par exemple selon l'axe X lorsqu'il est agencé de la manière représentée sur la [Fig.1].

L'élément d'injection de lumière 120 est de section rectangulaire ou carrée sur la [Fig.1]. Toutefois, l'élément d'injection de lumière 120 peut avoir une section ronde, ovale, ou polygonale.

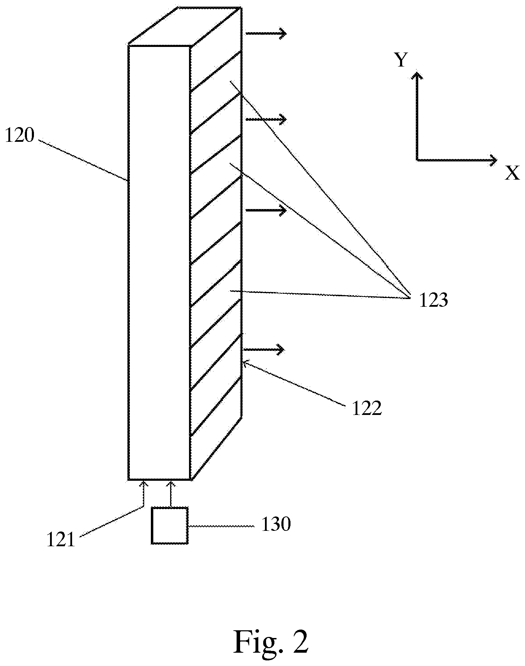

Ainsi, l'élément d'injection de lumière 120 comprend une surface de sortie 122 s'étendant selon la direction longitudinale et apte à injecter de la lumière dans une direction sensiblement normale à la surface de sortie 122. L'élément d'injection de lumière 120 comprend en outre une surface d'entrée 121, à une extrémité de l'élément d'injection de lumière 120, apte à recevoir des rayons lumineux depuis une source de lumière 130, et l'élément d'injection de lumière 120 est apte à guider la lumière longitudinalement selon l'axe Y en la distribuant sur la surface de sortie 122. La distribution de lumière par la surface de sortie 122 sera mieux comprise à la lumière de la description de la [Fig.2].

Aucune restriction n'est attachée à la source de lumière 130. La source de lumière 130 peut être apte à générer de la lumière dans un intervalle de longueurs d'onde. Un tel intervalle peut être centré autour d'une couleur visible, afin de générer une lumière colorée, par exemple du bleu, du rouge ou du vert. En variante, la source de lumière 130 peut émettre des rayons lumineux sur l'ensemble de l'intervalle des longueurs d'onde visibles par l'œil humain, de manière à générer de la lumière blanche. Un intervalle de longueurs d'onde très restreint peut être produit par une source de lumière 130 de type laser.

La source de lumière 130 peut être apte à générer de la lumière dans au moins deux intervalles de longueur d'onde distincts, par exemple correspondant à deux couleurs distinctes. Il peut par exemple s'agir d'une source électroluminescente de type LED par exemple, présentant l'avantage d'une faible taille, d'une faible consommation énergétique et d'un échauffement faible, produisant deux couleurs différentes de lumière, apte à être pilotée par un élément de contrôle non représenté. Il peut notamment s'agir d'une diode de type RGB, apte à produire de la lumière rouge, verte et bleue. Ainsi, le module lumineux selon le premier mode de réalisation peut comprendre une nappe de guidage flexible 110, un élément d'injection 120 et une source de lumière 130 apte à générer de la lumière dans au moins deux intervalles de longueurs d'onde distincts.

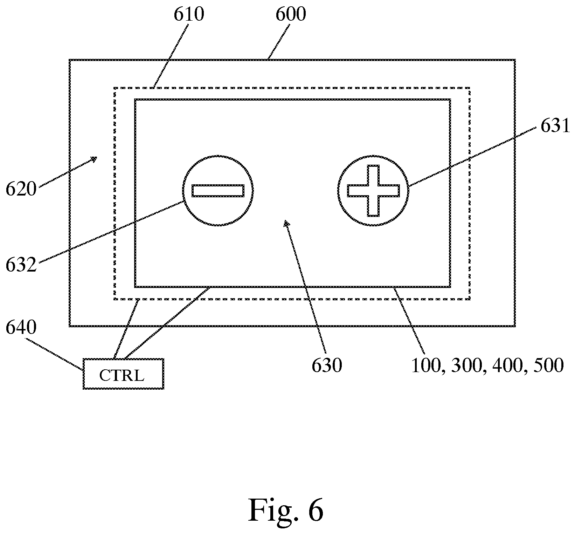

La source de lumière 130 peut être pilotée par un élément de contrôle non représenté, mais décrit ultérieurement, afin de faire varier la couleur projetée et ainsi réaliser une animation lumineuse. En variante, la couleur peut être contrôlée dynamiquement en fonction de données d'entrée tactile reçues par l'élément de contrôle, comme il sera mieux compris à la lecture de la description de la [Fig.6].

En variante, la source lumineuse 130 n'est pas agencée directement en regard de la surface d'entrée 121 de l'élément d'injection 120, mais le module lumineux 100 comprend en outre une fibre optique placée entre la source 130 et l'élément d'injection 120, ce qui permet de déporter la source 130 par rapport à l'assemblage formé par l'élément d'injection 120 et la nappe de guidage flexible 110.

La [Fig.2] présente un élément d'injection 120 d'un module lumineux selon des modes de réalisation de l'invention.

L'élément d'injection 120 peut comprendre une pluralité de guides d'injection 123 aptes à recevoir de la lumière de la source 130 par la surface d'entrée 121 et à guider la lumière jusqu'à une position longitudinale de la surface de sortie 122, les positions longitudinales des guides de lumière étant distinctes de manière à distribuer la lumière à au moins plusieurs positions longitudinales de la surface de sortie 122.

Il est ainsi rendu possible d'injecter de la lumière à des positions longitudinales différentes selon l'axe Y du bord 114. Chaque position longitudinale du bord 114 peut correspondre à une ligne de guidage du film flexible 111, apte à guider la lumière selon l'axe X le long d'une telle ligne de guidage.

Une telle association d'une nappe de guidage flexible 110, d'un élément d'injection 120 et d'une source 130 permet ainsi de projeter de la lumière selon la direction Z par une surface flexible, transparente, semi-transparente ou opaque, avec une bonne homogénéité surfacique et selon un motif donné.

En pratique, un tel module lumineux peut permettre d'émettre un motif avec une luminosité comprise entre 100 et 1000 Candelas par mètre carré, avec une efficacité d'extraction de lumière comprise pouvant varier entre 25% et 80%.

Des détails sur la structure et l'agencement de ces éléments 110, 120 et 130 sont davantage décrits dans la demande de brevet internationale publiée sous le numéro WO2011130715A2.

US2011277361A1 divulgue un dispositif émetteur de lumière pour véhicule, comprenant une vitre sur laquelle est agencé un module lumineux, le module lumineux comprenant: un guide de lumière flexible apte à recevoir des rayons lumineux par au moins un bord et à renvoyer les rayons lumineux dans une direction sensiblement normale à une surface du guide de lumière selon des signes gravés dans ledit guide de lumière et une source de lumière apte à injecter de la lumière dans ledit guide de lumière.

Un module lumineux d'un équipement intérieur pour véhicule selon l'invention comprend:
- un ensemble d'au moins une nappe de guidage, telle que la nappe de guidage flexible 110 illustrée sur la [Fig.1], l'ensemble étant apte à renvoyer de la lumière selon au moins un motif;
- au moins un élément d'injection de lumière tel que l'élément d'injection 120 décrit en référence aux figures 1 et 2; et
- au moins une source de lumière telle que la source de lumière 130 précédemment décrite en référence à la [Fig.1], apte à injecter de la lumière dans ledit au moins un élément d'injection.

On entend par "motif" toute répartition ou distribution spatiale prédéfinie de l'intensité lumineuse émise par le module lumineux. En particulier, on fait ici référence à un motif bidimensionnel ou unidimensionnel. Un motif peut ainsi comprendre une forme ou un symbole bidimensionnel obtenu par contraste entre les intensités lumineuses de différentes positions dans le plan X-Y de la nappe de guidage flexible 110. Le motif peut également comprendre plusieurs formes ou symboles. Alternativement, un motif recouvre une répartition spatiale prédéfinie, ou intentionnelle, de l'intensité lumineuse ne faisant pas apparaître de forme générale, telle qu'une répartition induisant un nuage de points lumineux. Dans le contexte de la présente invention, un motif est formé par l'injection de lumière dans un élément d'injection qui est agencé par rapport à une nappe de guidage flexible de manière à former le motif sur la nappe de guidage flexible. Une nappe de guidage flexible est ainsi apte à projeter de la lumière selon au moins un motif, et un motif peut correspondre à au moins une forme ou symbole. Une nappe de guidage flexible peut également projeter de la lumière selon au moins deux motifs, lorsque la nappe de guidage flexible est associée à plusieurs éléments d'injection.

Dans le premier mode de réalisation, le module lumineux comprend une unique source, un unique élément d'injection et une unique nappe de guidage flexible apte à former un motif.

Dans les deuxième, troisième et quatrième modes de réalisation qui suivent, le module lumineux comprend au moins deux éléments d'injection similaires à l'élément d'injection 120 précédemment décrit. Les modes de réalisation peuvent varier par le nombre d'éléments que comprend le module lumineux, et par leurs agencements respectifs. Toutefois, les descriptions et définitions données précédemment de la source de lumière, de l'élément d'injection et de la nappe de guidage flexible s'appliquent à l'ensemble des modes de réalisation.

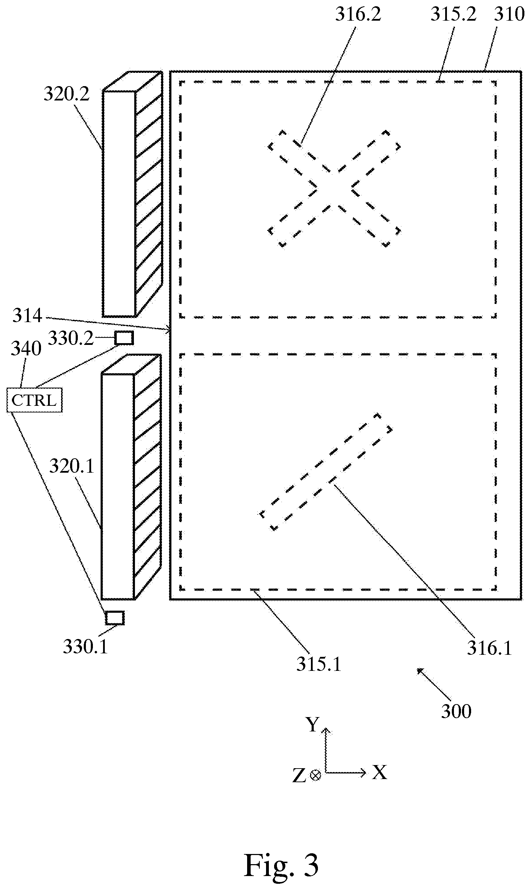

La [Fig.3] illustre un module lumineux 300 selon un deuxième mode de réalisation de l'invention.

Dans le deuxième mode de réalisation, plusieurs éléments d'injection sont agencés de manière à injecter de la lumière dans une même nappe de guidage flexible, comprenant plusieurs motifs.

En particulier, dans l'exemple de la [Fig.3], un premier élément d'injection 320.1 et un deuxième élément d'injection 320.2 sont agencés de manière à injecter de la lumière dans un bord 314 d'une nappe de guidage flexible 310.

Les premier et deuxième éléments d'injection 320.1 et 320.2 peuvent être similaires à l'élément d'injection 120 décrit en référence aux figures 1 et 2. De même, la nappe de guidage flexible 310 peut correspondre à la nappe de guidage flexible 110 précédemment décrite.

Comme représenté sur la [Fig.3], le premier élément d'injection 320.1 et le deuxième élément d'injection 320.2 sont agencés de manière à injecter de la lumière dans le bord 314, à des positions longitudinales distinctes, selon l'axe Y.

A noter que, du fait de sa flexibilité, la nappe de guidage 310 peut ne pas être plane mais peut être courbée. La [Fig.3] présente ainsi le module lumineux 300 lorsque la nappe de guidage est plane, par exemple posée sur un support rigide plan.

Le premier élément d'injection 320.1 est ainsi apte à injecter de la lumière dans le bord 314, qui est ensuite guidée par la nappe de guidage flexible 310 dans une première partie 315.1 de la nappe de guidage flexible 310. Le deuxième élément d'injection 320.2 est apte à injecter de la lumière dans le bord 314, qui est ensuite guidée dans une deuxième partie 315.2 de la nappe de guidage flexible 310.

A cet effet, une première source 330.1 est agencée en regard d'une surface d'entrée du premier élément d'injection 320.1 de manière à propager des rayons lumineux à l'intérieur du premier élément d'injection 320.1 et donc vers la première partie 315.1 de la nappe de guidage flexible 310. Une deuxième source 330.2 est agencée en regard d'une surface d'entrée du deuxième élément d'injection 320.2 de manière à propager des rayons lumineux à l'intérieur du deuxième élément d'injection 320.2 et donc vers la deuxième partie 315.2 de la nappe de guidage flexible 310.

En variante, une unique source peut être prévue et le module lumineux 300 comprend une première fibre optique apte à acheminer la lumière de l'unique source vers la surface d'entrée du premier élément d'injection 320.1 et une deuxième fibre optique est apte à acheminer la lumière de l'unique source vers la surface d'entrée du deuxième élément d'injection 320.2.

Les première et deuxième sources 330.1 et 330.2, ou l'unique source, peuvent injecter sélectivement dans le premier élément d'injection 320.1 et/ou dans le deuxième élément d'injection 320.2. Une telle injection sélective peut être contrôlée par un élément de contrôle 340 relié aux deux sources 330.1 et 330.2, ou contrôlant l'alimentation des deux sources 330.1 et 330.2.

Un premier motif 316.1 est gravé dans la première partie 315.1 tandis qu'un deuxième motif 316.2 est gravé dans la deuxième partie 315.2. L'injection sélective de lumière dans le premier élément d'injection 320.1 et/ou dans le deuxième élément d'injection 320.2 permet ainsi de projeter le premier motif, le deuxième motif, aucun des motifs ou les deux motifs à la fois, rendant ainsi possible, par un contrôle dynamique, la réalisation d'une animation à partir au moins des premier et deuxième motifs, ou l'affichage d'une information lumineuse dynamique. En variante, l'injection sélective de lumière peut être contrôlée dynamiquement en fonction de données d'entrée tactile reçues par l'élément de contrôle 340, comme il sera mieux compris à la lecture de la description de la [Fig.6].

Sur l'exemple de la [Fig.3], les premier et deuxième motifs 316.1 et 316.2 correspondent chacun à un symbole, les symboles étant distincts. Toutefois, conformément à la définition de "motif" précédemment donnée, les motifs peuvent être toute distribution spatiale intentionnelle, ou prédéterminée, d'intensité lumineuse. En outre, lorsque les motifs sont des formes ou symboles, les premier et deuxième motifs 316.1 et 316.2 peuvent avoir des formes identiques. L'animation est alors permise par le déplacement spatial du motif de la première partie 315.1 à la deuxième partie 315.2, ou vice versa. En outre, les couleurs projetées respectivement pour chaque motif peuvent varier, lorsque les sources 330.1 et 330.2 produisent de la lumière de couleurs différentes.

Un exemple avec deux motifs et deux éléments d'injection a été représenté sur la [Fig.3]. Toutefois, le premier mode de réalisation couvre également un module lumineux avec une nappe de guidage flexible avec trois parties ou plus, chaque partie comprenant un motif gravé, et avec au moins trois éléments d'injection, chaque élément d'injection étant placé en regard de l'une des parties.

Des sources dédiées à chaque élément d'injection peuvent être prévues à cet effet, ou une unique source avec plusieurs fibres optiques peuvent être prévues à cet effet.

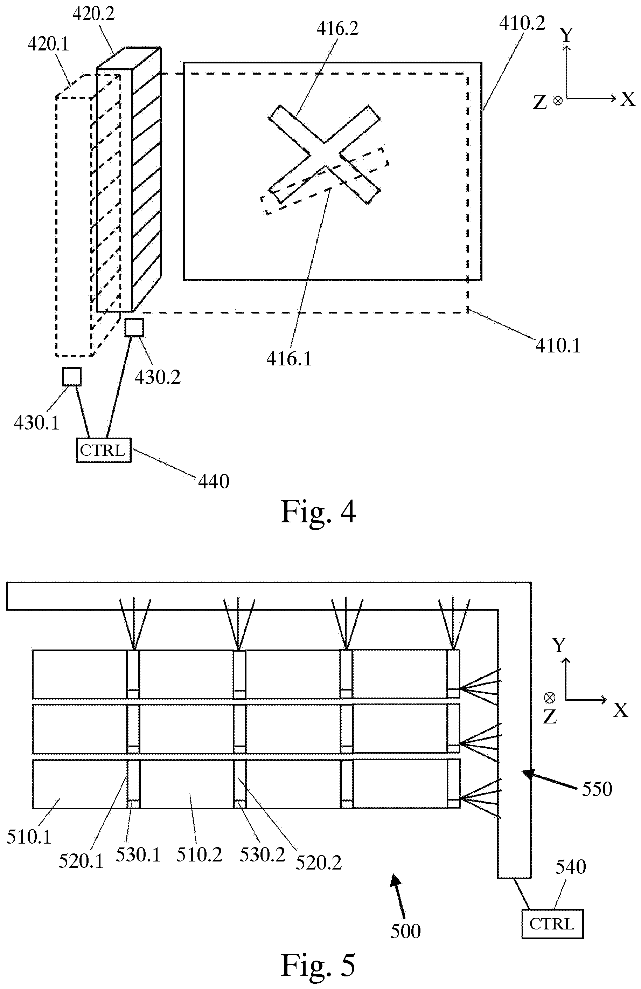

La [Fig.4] illustre un module lumineux 400 selon un deuxième mode de réalisation de l'invention.

Dans le deuxième mode de réalisation de l'invention, le module lumineux 400 comprend au moins une première nappe de guidage flexible 410.1 et une deuxième nappe de guidage flexible 410.2, les deux nappes de guidage flexibles étant superposées, ce qui implique qu'au moins une partie de la première nappe de guidage flexible 410.1, dans le plan X-Y, est superposée avec au moins une partie de la deuxième nappe de guidage flexible 410.2, dans une zone commune, qui correspond à un ensemble de positions dans le plan X-Y.

De manière préférentielle, les première et deuxième nappes de guidage flexibles 410.1 et 410.2 ont les mêmes dimensions dans le plan X-Y, et se superposent intégralement.

A noter que du fait de leur flexibilité, les nappes de guidage peuvent ne pas être planes mais peuvent être courbées. La [Fig.4] présente ainsi le module lumineux 400 lorsque les nappes de guidage sont planes, par exemple empilées sur un support plan.

Une telle superposition est notamment avantageuse du fait que les nappes de guidage flexibles sont préférentiellement transparentes comme détaillé précédemment.

Ainsi, les première et deuxième nappes de guidage flexibles 410.1 et 410.2 sont aptes à projeter respectivement un premier motif 416.1 et un deuxième motif 416.2 dans une zone commune.

Un premier élément d'injection 420.1 est agencé pour injecter de la lumière dans un bord de la première nappe de guidage flexible 410.1 et un deuxième élément d'injection 420.2 est apte et agencé pour injecter de la lumière dans un bord de la deuxième nappe de guidage 410.2.

A cet effet, une première source 430.1 est agencée en regard d'une surface d'entrée du premier élément d'injection 420.1 de manière à propager des rayons lumineux à l'intérieur du premier élément d'injection 420.1 et donc vers la première nappe de guidage flexible 410.1. Une deuxième source 430.2 est agencée en regard d'une surface d'entrée du deuxième élément d'injection 420.2 de manière à propager des rayons lumineux à l'intérieur du deuxième élément d'injection 420.2 et donc vers la deuxième nappe de guidage flexible 410.2.

En variante, une unique source peut être prévue et le module lumineux comprend une première fibre optique apte à acheminer la lumière de l'unique source vers la surface d'entrée du premier élément d'injection 420.1 et une deuxième fibre optique est apte à acheminer la lumière de l'unique source vers la surface d'entrée du deuxième élément d'injection 420.2.

Les première et deuxième sources 430.1 et 430.2, ou l'unique source, peuvent injecter sélectivement dans le premier élément d'injection 420.1 et/ou dans le deuxième élément d'injection 420.2. Une telle injection sélective peut être contrôlée par un élément de contrôle 440 relié aux deux sources 430.1 et 430.2, ou contrôlant l'alimentation des deux sources 430.1 et 430.2.

Le premier motif 416.1 est gravé dans la première nappe de guidage flexible 410.1 tandis que le deuxième motif 416.2 est gravé dans la deuxième nappe de guidage flexible 410.2. L'injection sélective de lumière dans le premier élément d'injection 420.1 et/ou dans le deuxième élément d'injection 420.2 permet ainsi de projeter le premier motif, le deuxième motif, aucun des motifs ou les deux motifs à la fois, rendant ainsi possible, par un contrôle dynamique, la réalisation d'une animation à partir au moins des premier et deuxième motifs. En variante, l'injection sélective de lumière peut être contrôlée dynamiquement en fonction de données d'entrée tactile reçues par l'élément de contrôle 440, comme mieux compris à la lecture de la description de la [Fig.6].

Sur l'exemple de la [Fig.4], les premier et deuxième motifs 416.1 et 416.2 présentent des symboles distincts, et sont identiques aux motifs 316.1 et 316.2 de la [Fig.3], à titre illustratif. Toutefois, conformément à la définition du motif précédemment donnée, les motifs peuvent être toute répartition spatiale intentionnelle, ou prédéterminée, d'intensité lumineuse. En outre, lorsque les motifs sont des formes ou symboles, les premier et deuxième motifs 416.1 et 416.2 peuvent avoir des symboles identiques mais des couleurs distinctes. En effet, les couleurs projetées respectivement pour chaque motif peuvent varier, lorsque les sources 430.1 et 430.2 produisent de la lumière de couleurs différentes.

Un exemple avec deux motifs, deux éléments d'injection et deux nappes de guidage flexibles a été représenté sur la [Fig.4]. Toutefois, le deuxième mode de réalisation couvre également un module lumineux avec au moins trois nappes de guidage flexibles avec au moins trois éléments d'injection, chaque élément d'injection étant placé en regard de l'une des nappes de guidage flexibles. Des sources dédiées à chaque élément d'injection peuvent être prévues à cet effet, ou une unique source avec plusieurs fibres optiques peuvent être prévues à cet effet.

Au moins l'une des nappes de guidage flexibles peut être transparente. En variante, selon le deuxième mode de réalisation, la nappe de guidage flexible située en dessous du module lumineux 400, c'est-à-dire la première nappe de guidage flexible 410.1, peut être opaque ou semi-transparente. En revanche, la deuxième nappe de guidage flexible 410.2 est transparente ou semi-transparente, de manière à laisser passer au moins une partie de la lumière émise par la première nappe de guidage flexible 410.2. La deuxième nappe de guidage flexible 410.2 peut en outre comprendre un matériau texturé, de manière à améliorer l'aspect esthétique du module lumineux et/ou de manière à harmoniser son matériau avec le matériau de l'équipement intérieur dans lequel le module lumineux est intégré. Un tel matériau texturé peut également être utilisé pour les nappes de guidage flexibles des modules lumineux selon les premier, deuxième et quatrième modes de réalisation. On entend par matériau texturé tout matériau présentant une texture prédéfinie impliquant par exemple un traitement de surface de la nappe de guidage flexible. Le matériau texturé peut comprendre des granules, des stries ou fentes ou tout autre élément de texture.

La [Fig.5] illustre un module lumineux 500 selon un quatrième mode de réalisation de l'invention.

Dans le quatrième mode de réalisation de l'invention, le module lumineux 500 comprend au moins une première nappe de guidage flexible 510.1 et une deuxième nappe de guidage flexible 510.2, les deux nappes de guidage flexibles étant placées l'une à côté de l'autre, et les deux nappes de guidage flexibles sont ainsi aptes à projeter des rayons lumineux depuis des positions distinctes dans le plan X-Y dans lequel les nappes de guidage flexibles s'étendent principalement.

A noter que du fait de leur flexibilité, les nappes de guidage peuvent ne pas être planes mais peuvent être courbées. La [Fig.5] présente ainsi le module lumineux 500 lorsque les nappes de guidage flexibles sont planes, par exemple posées sur un support rigide plan.

Ainsi, la première nappe de guidage flexible 510.1 est apte à projeter un premier motif, non représenté, à une première position du plan X-Y, et la deuxième nappe de guidage flexible 510.2 est apte à projeter un deuxième motif 516.2 à une deuxième position du plan X-Y, les première et deuxième positions étant distinctes, par exemple l'une à côté de l'autre. Chaque motif projeté peut comprendre un symbole ou une partie de symbole. Lorsqu'un motif d'une nappe de guidage flexible comprend une partie de symbole, une telle partie peut être complémentaire d'une autre partie de symbole formée par le motif d'une autre nappe de guidage flexible, ou d'autres parties de symbole formées par les motifs d'autres nappes de guidage flexibles.

Un premier élément d'injection 520.1 est agencé pour injecter de la lumière dans un bord de la première nappe de guidage flexible 510.1 et un deuxième élément d'injection 520.2 est agencé pour injecter de la lumière dans un bord de la deuxième nappe de guidage 510.2.

L'agencement relatif de chaque élément d'injection par rapport à une nappe de guidage flexible est conforme aux explications précédemment données, et n'est pas détaillé à nouveau pour le quatrième mode de réalisation de la [Fig.5].

Une première source 530.1 est agencée en regard d'une surface d'entrée du premier élément d'injection 520.1 de manière à propager des rayons lumineux à l'intérieur du premier élément d'injection 520.1 et donc vers la première nappe de guidage flexible 510.1. Une deuxième source 530.2 est agencée en regard d'une surface d'entrée du deuxième élément d'injection 520.2 de manière à propager des rayons lumineux à l'intérieur du deuxième élément d'injection 520.2 et donc vers la deuxième nappe de guidage flexible 510.2.

En variante, une unique source peut être prévue et le module lumineux 500 comprend une première fibre optique apte à acheminer la lumière de l'unique source vers la surface d'entrée du premier élément d'injection 520.1 et une deuxième fibre optique est apte à acheminer la lumière de l'unique source vers la surface d'entrée du deuxième élément d'injection 520.2.

Les première et deuxième sources 530.1 et 530.2, ou l'unique source, peuvent injecter sélectivement de la lumière dans le premier élément d'injection 520.1 et/ou dans le deuxième élément d'injection 520.2. Une telle injection sélective peut être contrôlée par un élément de contrôle 540 relié aux deux sources 530.1 et 530.2, ou contrôlant l'alimentation des deux sources 530.1 et 530.2. En variante, l'injection sélective de lumière peut être contrôlée dynamiquement en fonction de données d'entrée tactile reçues par l'élément de contrôle 540, comme il sera mieux compris à la lecture de la description de la [Fig.6].

Le premier motif est gravé dans la première nappe de guidage flexible 510.1 tandis que le deuxième motif est gravé dans la deuxième nappe de guidage flexible 510.2. L'injection sélective de lumière dans le premier élément d'injection 520.1 et/ou dans le deuxième élément d'injection 520.2 permet ainsi de projeter le premier motif, le deuxième motif, aucun des motifs ou les deux motifs à la fois, rendant ainsi possible, par un contrôle dynamique, la réalisation d'une animation à partir au moins des premier et deuxième motifs.

Dans l'exemple de la [Fig.5], un module lumineux 500 comprenant douze nappes de guidage flexibles, douze éléments d'injection et douze sources de lumière, arrangés en matrice à trois lignes et quatre colonnes, a été représenté, à titre illustratif uniquement.

Aucune restriction n'est attachée au nombre de nappes de guidage flexibles dans le troisième mode de réalisation. Le troisième mode de réalisation s'applique ainsi à N nappes de guidage flexibles, N éléments d'injection respectivement associés, et N sources lumineuses, ou une source unique reliée par N fibres optiques aux N éléments d'injection, N étant n'importe quel entier supérieur ou égal à 2.

Aucune restriction n'est par ailleurs attachée à l'agencement des nappes de guidage flexibles les unes par rapport aux autres. Lorsqu'elles sont positionnées en matrices, aucune restriction n'est attachée au nombre de lignes ou au nombre de colonnes.

Les premier et deuxième motifs peuvent avoir des formes distinctes, et peuvent par exemple être identiques aux motifs 316.1 et 316.2 de la [Fig.3]. Toutefois, conformément à la définition de "motif" précédemment donnée, les motifs peuvent être toute répartition spatiale intentionnelle, ou prédéterminée, d'intensité lumineuse. En outre, lorsque les motifs sont des formes ou symboles, les premier et deuxième motifs peuvent avoir des symboles identiques mais des couleurs distinctes. En effet, les couleurs projetées respectivement pour chaque motif peuvent varier, lorsque les sources 530.1 et 530.2 produisent de la lumière de couleurs différentes.

En outre, comme expliqué précédemment, les motifs peuvent comprendre des parties de symboles complémentaires les unes des autres, de manière à former un ou plusieurs symboles sur plusieurs nappes de guidage flexibles de la matrice.

Les nappes de guidage flexibles peuvent être liées les unes aux autres par une structure matricielle support, qui peut elle-même être flexible. En variante, chaque nappe de guidage flexible peut être reliée aux nappes de guidage flexibles qui l'entourent par des moyens de fixation, par collage, enserrage, clipsage, ou toute autre méthode.

L'ensemble des sources de lumière peut être contrôlé par l'élément de contrôle 540, via un ensemble de fils, chaque fil reliant l'élément de contrôle 540 à une source de lumière. Les fils peuvent être portés par une structure 550 permettant de centraliser les fils et de les acheminer vers l'élément de contrôle, ce qui réduit l'encombrement, et permettant également de cacher les fils.

Aucune restriction n'est attachée aux dimensions dans le plan X-Y des nappes de guidage flexibles. Par exemple, chaque nappe de guidage flexible peut être de forme rectangulaire ou carrée, avec au moins une dimension comprise entre 2 et 10 cm. Par exemple, les nappes de guidage flexibles sont des carrés ou rectangles, avec:
- une dimension comprise entre 2cm et 10cm, par exemple entre 2cm et 5cm, par exemple égale à 5cm; et
- une autre dimension comprise entre 2cm et 10cm, par exemple entre 2cm et 5cm, par exemple égale à 5cm.

Par exemple, chaque nappe de guidage flexible est un carré de 3cm sur 3cm.

Les deuxième, troisième et quatrième modes de réalisation ont été décrits de manière exclusive les uns des autres. Toutefois, il convient de noter que ces trois modes de réalisation peuvent être combinés dans un même module lumineux, en particulier:
- le deuxième mode de réalisation et le troisième mode de réalisation peuvent être combinés: au moins deux nappes de guidage flexibles sont superposées, et l'une des deux nappes de guidage flexibles est associée à deux guides d'injection de lumière aptes à injecter de la lumière sélectivement dans deux parties distinctes de la nappe de guidage, deux motifs étant respectivement gravés dans les deux parties;
- le deuxième mode de réalisation et le quatrième mode de réalisation peuvent être combinés: au moins deux nappes de guidage flexibles sont placées l'une à côté de l'autre, et l'une des deux nappes de guidage flexibles est associée à deux guides d'injection de lumière aptes à injecter de la lumière sélectivement dans deux parties distinctes de la nappe de guidage, deux motifs étant respectivement gravés dans les deux parties;
- le troisième mode de réalisation et le quatrième mode de réalisation peuvent être combinés: au moins deux nappes de guidage flexibles sont placées l'une à côté de l'autre, et l'une des deux nappes de guidage flexibles est superposée avec une troisième nappe de guidage flexible du module lumineux;
- le deuxième mode de réalisation, le troisième mode de réalisation et le quatrième mode de réalisation peuvent être combinés: au moins deux nappes de guidage flexibles sont placées l'une à côté de l'autre, et l'une des deux nappes de guidage flexibles est superposée avec une troisième nappe de guidage flexible du module lumineux, et l'une de ces trois nappes de guidage flexibles est associée à deux guides d'injection de lumière aptes à injecter de la lumière sélectivement dans deux parties distinctes de la nappe de guidage, deux motifs étant respectivement gravés dans les deux parties.

La [Fig.6] illustre un équipement intérieur 600 pour véhicule automobile selon des modes de réalisation de l'invention.

L'équipement intérieur 600 selon l'invention comprend un module lumineux 100, 300, 400, 500 selon l'un des modes de réalisation décrits précédemment, ou selon une combinaison de plusieurs des modes de réalisation décrit précédemment, ainsi qu'une surface externe 620 sur laquelle est fixé le module lumineux 100, 300, 400, 500.

On entend par surface externe, une surface accessible par un utilisateur lorsque l'équipement intérieur est monté dans un véhicule. Elle se distingue donc d'une surface interne qui n'est accessible qu'en démontant ledit équipement, ou lorsque l'équipement n'est pas monté dans le véhicule.

On entend par équipement "intérieur" tout équipement comprenant au moins une surface externe prévue pour être accessible à un utilisateur à l'intérieur du véhicule automobile.

Aucune restriction n'est attachée à la manière dont le module lumineux 100, 300, 400, 500 est fixé sur la surface externe 620.

Le module lumineux 100, 300, 400, 500 peut par exemple être inséré dans un cadre ou un support de l'équipement 600, prévu à cet effet, ayant notamment une forme complémentaire du module lumineux 600, et maintenu en position par collage, vissage, clipsage, serrage, ou tout autre type de moyen de maintien ou de moyen de fixation. En variante, le module lumineux 100, 300, 400, 500 est directement collé sur la surface externe 620 de l'équipement 600.

L'équipement 600 peut également comprendre un élément de contrôle 640 qui peut être l'un des éléments de contrôle précédemment décrits en référence aux quatre modes de réalisation. Ainsi, l'élément de contrôle 640 peut être externe au module lumineux 100, 300, 400, 500. En variante, il peut être interne au module lumineux 100, 300, 400, 500, comme décrit précédemment.

L'élément de contrôle 640 peut comprendre un processeur configuré pour communiquer de manière unidirectionnelle ou bidirectionnelle, via un ou des bus ou via une connexion filaire, avec une mémoire telle qu'une mémoire de type « Random Access Memory », RAM, ou une mémoire de type « Read Only Memory », ROM, ou tout autre type de mémoire (Flash, EEPROM, etc). En variante, la mémoire comprend plusieurs mémoires des types précités. De manière préférentielle, la mémoire est une mémoire non volatile. Le processeur est apte à exécuter des instructions, stockées dans la mémoire, pour la mise en œuvre d'une ou plusieurs animations en fonction de la réception de commandes d'animation, ou pour contrôler la projection de motifs en fonction de données d'entrée tactile issues de la couche tactile 610 décrite ci-après. De manière alternative, le processeur peut être remplacé par un microcontrôleur conçu et configuré pour la mise en œuvre de d'une ou plusieurs animations en fonction de la réception de commandes d'animation, ou pour contrôler la projection de motifs en fonction de données d'entrée tactile issues de la couche tactile 610 décrite ci-après.

De manière optionnelle, l'équipement intérieur 600 peut comprendre en outre une couche tactile 610 apte à recevoir une entrée tactile d'un utilisateur. Aucune restriction n'est attachée à une telle entrée tactile, qui peut être un appui, un appui prolongé, un effleurement, un glissement, un appui avec deux doigts, un espacement avec deux doigts, un rétrécissement avec deux doigts, deux appuis consécutifs, ou tout autre type d'entrée tactile.

Aucune restriction n'est par ailleurs attachée à la technologie associée à la couche tactile 610, qui peut par exemple être de type capacitive. En variante, la couche tactile 610 est de type résistive. De telles technologies sont bien connues et ne sont pas détaillées davantage dans la présente description.

Le module lumineux 100, 300, 400, 500, est apte à former un ou plusieurs motifs 630 comprenant un premier symbole 631, tel que le signe +, et un deuxième symbole 632, tel que le signe -. De tels exemples de motifs sont donnés à titre illustratif uniquement, comme expliqué précédemment.

Selon le mode de réalisation considéré, le motif 630 peut être projeté par une ou plusieurs nappes de guidage flexibles:
- dans le premier mode de réalisation, le motif 630 est formé par une unique nappe de guidage flexible d'un module lumineux 100;
- dans le deuxième mode de réalisation, le motif 630 est formé par une unique nappe de guidage flexible d'un module lumineux 300, mais chaque symbole 631 et 632 peut être projeté par injection sélective dans deux éléments d'injection en regard de sections distinctes du bord de la nappe de guidage flexible, de manière à projeter les symboles 631 et 632 dans deux zones distinctes. Le motif projeté peut ainsi comprendre un symbole, l'autre symbole, les deux symboles ou aucun symbole. De manière plus générale, l'injection sélective dans l'un, l'autre ou les deux éléments d'injection permet de faire varier dynamiquement le motif 630 projeté;
- dans le troisième mode de réalisation, le motif 630 est formé par une superposition d'au moins deux nappes de guidage flexibles d'un module lumineux 400. Selon un premier exemple, chaque nappe de guidage flexible réalise le même motif 630, mais de couleurs différentes, ce qui permet de réaliser une variation dynamique de couleurs. Selon un deuxième exemple, une première nappe de guidage flexible est apte à projeter le premier symbole 631 selon une première couleur, et la deuxième nappe de guidage flexible est apte à projeter le deuxième symbole 632 selon une deuxième couleur, identique ou différente de la première couleur, et l'injection de lumière est sélectivement contrôlée entre les deux nappes de guidage flexibles, de manière à faire varier dynamiquement le motif 630 projeté, comme dans le deuxième mode de réalisation;
- dans le quatrième mode de réalisation, le motif 630 est formé par une matrice d'au moins deux nappes de guidage flexibles l'une à côté de l'autre. Ainsi, selon un premier exemple, une première nappe de guidage flexible projette le premier symbole 631 et une deuxième nappe de guidage flexible projette le deuxième symbole 632. En variante, le module lumineux 500 comprend plus de deux nappes de guidage flexibles, et chaque nappe de guidage flexible est apte à projeter une partie des symboles 631 et 632. Par exemple, chaque symbole peut être réalisé par quatre nappes de guidage flexibles.

Lorsque plusieurs symboles sont formés par le motif 630, comme c'est le cas sur la [Fig.6], chaque symbole peut être projeté dans une zone donnée du module lumineux 100, 300, 400, 500. Le premier symbole 631 peut être projeté dans une première zone donnée du module lumineux, située à droite, et le deuxième symbole 632 peut être projeté dans une deuxième zone donnée du module lumineux, située à gauche.

Selon un mode de réalisation, la couche tactile 610 peut comprendre des zones tactiles correspondant respectivement aux première et deuxième zones données. Ainsi, une première zone tactile peut être superposée avec la première zone donnée et une deuxième zone tactile peut être superposée avec la deuxième zone donnée. Une zone tactile et une zone donnée du module lumineux peuvent ne se superposer que partiellement.

Ainsi, une première entrée tactile peut être reçue dans la première zone tactile, lorsque l'utilisateur touche le premier symbole 631 et une deuxième entrée tactile peut être reçue lorsque l'utilisateur touche le deuxième symbole 632. Des premières données d'entrée tactile sont transmises à l'élément de contrôle 640 lorsque la première entrée tactile est reçue et des deuxièmes données d'entrée tactile sont transmises à l'élément de contrôle 640 lorsque la deuxième entrée tactile est reçue.

L'élément de contrôle 640 est apte à contrôler la ou les sources du module lumineux 100, 300, 400, 500 en fonction des données d'entrée tactiles reçues. A titre d'exemples:
- l'élément de contrôle 640 peut faire varier l'intensité lumineuse du motif en fonction des données d'entrée tactile. Par exemple, l'élément de contrôle augmente l'intensité lumineuse du motif 630 projeté lorsque les premières données d'entrée tactile sont reçues, et diminue l'intensité lumineuse du motif 630 projeté lorsque les deuxièmes données d'entrée tactile sont reçues;
- l'élément de contrôle 640 peut faire varier la couleur du motif 630 en fonction des données d'entrée tactile reçues;
- l'élément de contrôle peut activer ou désactiver certaines des sources lumineuses en fonction des données d'entrée tactile reçues.

En variante ou en complément, l'élément de contrôle 640 peut contrôler un autre dispositif du véhicule non représenté sur la [Fig.6], en fonction des données d'entrée tactile. Par exemple, le volume sonore d'un haut-parleur peut être augmenté ou diminué en fonction des données d'entrée tactile. En variante, la température d'un système de climatisation/chauffage du véhicule peut être contrôlée sur la base des données d'entrée tactile reçues.

Plus de deux symboles dans plus de deux zones données associées à plus de deux zones tactiles peuvent être prévues, et l'élément de contrôle 640 est apte à contrôler le module lumineux 100, 300, 400, 500 ou d'autres dispositifs en fonction de plus de deux données d'entrée tactile.

Aucune restriction n'est attachée au type d'équipement intérieur 600 considéré.

L'équipement intérieur 600 peut par exemple être un tableau de bord d'un véhicule automobile. Par exemple, il peut s'agir d'un tableau de bord côté passager d'un véhicule automobile. L'équipement intérieur 600 peut ainsi être avantageusement utilisé pour commander d'autres dispositifs du véhicule, tel que le système de chauffage/climatisation ou les hauts-parleurs. Dans le cas où l'équipement intérieur est un tableau de bord, il peut comprendre un dispositif gonflable de sécurité, de type "airbag" par exemple, sous la surface externe 620 de l'équipement 600, et non représenté sur la [Fig.6]. Dans ce cas, le module lumineux comprenant une ou plusieurs nappes de guidage flexibles de faible épaisseur, le module lumineux 100, 300, 400, 500 peut être déchiré par le dispositif gonflable de sécurité en cas de choc du véhicule, ce qui permet de réaliser des fonctions lumineuses d'ambiance, esthétiques, ou de contrôler des dispositifs du véhicule, sans diminuer la sécurité de conduite permise par le dispositif gonflable de sécurité.

L'équipement intérieur 600 peut alternativement être un siège pour véhicule automobile, notamment la partie arrière du siège, de manière à projeter de la lumière vers un passager arrière du véhicule. Le module lumineux 100, 300, 400, 500 peut être intégré dans l'arrière d'un appui-tête du siège ou dans l'arrière du corps du siège. En variante, l'équipement intérieur 600 peut être un toit pour véhicule automobile ou une plage arrière pour véhicule automobile.

La présente invention ne se limite pas aux formes de réalisation décrites ci-avant à titre d'exemples ; elle s'étend à d'autres variantes.

## Revendications

1. Equipement intérieur (600) pour véhicule automobile, ledit équipement comprenant une surface externe (620) sur laquelle est agencé un module lumineux (100, 300; 400; 500), le module lumineux comprenant :
- un ensemble d'au moins une nappe de guidage flexible (110; 310; 410.1; 410.2; 510.1; 510.2), chaque nappe de guidage flexible de l'ensemble étant apte à recevoir des rayons lumineux par au moins un bord (114; 314) de ladite nappe de guidage flexible et à renvoyer les rayons lumineux dans une direction sensiblement normale à une surface de la nappe de guidage flexible selon au moins un motif (630) gravé dans ladite nappe de guidage flexible ;
- au moins un élément d'injection de lumière (120; 320.1;320.2; 420.1; 420.2; 520.1; 520.2) comprenant une surface d'entrée (121) apte à recevoir de la lumière et une surface de sortie (122) apte à distribuer la lumière dans l'ensemble d'au moins une nappe de guidage flexible ;
- au moins une source de lumière (130; 330.1; 330.2; 430.1; 430.2; 530; 530.2) apte à injecter de la lumière dans ledit au moins un élément d'injection de lumière.

2. Equipement intérieur selon la revendication 1, comprenant en outre une couche tactile (610) apte à recevoir une entrée tactile d'un utilisateur, ladite couche tactile est située entre la surface externe (620) de l'équipement et le module lumineux (100, 300; 400; 500), ou sous la surface externe de l'équipement.

3. Equipement intérieur selon la revendication 2, dans lequel la couche tactile (610) est une couche capacitive.

4. Equipement intérieur selon l'une des revendications précédentes, comprenant en outre un élément de contrôle (640) apte à contrôler ladite au moins une source de lumière (130; 330.1; 330.2; 430.1; 430.2; 530; 530.2).

5. Equipement intérieur selon la revendication 4, et selon la revendication 2 ou 3, dans lequel l'élément de contrôle (640) est apte à recevoir des données d'entrée tactile de la couche tactile (610) et est configuré pour contrôler ladite au moins une source de lumière (130; 330.1; 330.2; 430.1; 430.2; 530; 530.2) en fonction des données d'entrée tactile.

6. Equipement intérieur selon la revendication 5, dans lequel le module lumineux (100; 300; 400; 500) est apte à afficher au moins un symbole (631;632) dans une zone donnée du module lumineux à partir du motif de chaque nappe de guidage flexible de l'ensemble, et dans lequel une zone tactile de la couche tactile (610) en regard de la zone donnée du module lumineux est apte à recevoir une entrée tactile pour générer des données d'entrée tactile en fonction de ladite zone tactile.

7. Equipement intérieur selon la revendication 6, dans lequel le module lumineux (100; 300; 400; 500) est apte à afficher au moins un premier symbole (631) dans une première zone donnée du module lumineux et au moins un deuxième symbole (632) dans une deuxième zone donnée du module lumineux, à partir du motif (630) de chaque nappe de guidage flexible de l'ensemble, et dans lequel une première zone tactile de la couche tactile (610) est en regard de la première zone donnée du module lumineux et une deuxième zone tactile de la couche tactile est en regard de la deuxième zone donnée du module lumineux, dans lequel une première donnée d'entrée tactile est générée par la couche tactile sur réception d'une première entrée tactile dans la première zone tactile, et dans lequel une deuxième donnée d'entrée tactile est générée par la couche tactile sur réception d'une deuxième entrée tactile dans la deuxième zone tactile.

8. Equipement intérieur selon l'une des revendications 4 à 7, dans lequel le module lumineux (100; 300; 400; 500) comprend une nappe de guidage flexible (110; 310; 410.1; 410.2; 510.1; 510.2), un élément d'injection de lumière (120; 320.1;320.2; 420.1; 420.2; 520.1; 520.2) et une source de lumière (130; 330.1; 330.2; 430.1; 430.2; 530; 530.2), dans laquelle la source de lumière est apte à projeter de la lumière dans un premier intervalle de longueurs d'onde et dans un deuxième intervalle de longueurs d'onde distinct du premier intervalle, ledit élément de contrôle (640) étant apte à contrôler la source de lumière pour projeter de la lumière dans le premier intervalle ou dans le deuxième intervalle.

9. Equipement intérieur selon la revendication 8, dans lequel l'élément de contrôle (640) est apte à contrôler la source de lumière (130; 330.1; 330.2; 430.1; 430.2; 530; 530.2) pour projeter de la lumière dans le premier intervalle ou dans le deuxième intervalle en fonction d'une commande d'animation.

10. Equipement intérieur selon les revendications 8 ou 9, et selon l'une des revendications 5 à 7, dans lequel l'élément de contrôle (640) est apte à contrôler la source de lumière (130; 330.1; 330.2; 430.1; 430.2; 530; 530.2) pour projeter de la lumière dans le premier intervalle ou dans le deuxième intervalle en fonction des données d'entrée tactile.

11. Equipement intérieur selon l'une des revendications 8 à 10, dans lequel le module lumineux (100; 300) comprend une unique nappe de guidage flexible (110; 310).

12. Equipement intérieur selon l'une des revendications 1 à 10, dans lequel le module lumineux (300; 400; 500) comprend un premier élément d'injection (320.1; 420.1; 520.1) et un deuxième élément d'injection (320.2; 420.2; 520.2), dans lequel ladite au moins une source (330.1; 330.2; 430.1; 430.2; 530; 530.2) est apte à sélectivement injecter de la lumière dans le premier élément d'injection et dans le deuxième élément d'injection, et dans lequel, le premier élément d'injection de lumière et l'ensemble d'au moins une nappe de guidage flexible (310; 410.1; 410.2; 510.1; 510.2) sont agencés de manière à projeter de la lumière selon le premier motif et dans lequel le deuxième élément d'injection de lumière et l'ensemble d'au moins une nappe de guidage flexible sont agencés de manière à projeter de la lumière selon le deuxième motif.

13. Equipement intérieur selon la revendication 12, comprenant une première source de lumière (330.1; 430.1; 530.1) apte à injecter de la lumière dans le premier élément d'injection de lumière (320.1; 420.1; 520.1) et une deuxième source de lumière (330.2; 430.2; 530.2) apte à injecter de la lumière dans le deuxième élément d'injection de lumière (320.2; 420.2; 520.2).

14. Equipement intérieur selon la revendication 13, dans lequel la première source de lumière (330.1; 430.1; 530.1) est apte à générer de la lumière dans un premier intervalle de longueurs d'onde et dans lequel la deuxième source de lumière est apte à générer de la lumière dans un deuxième intervalle de longueurs d'onde (330.2; 430.2; 530.2), différent du premier intervalle.

15. Equipement intérieur selon l'une des revendications 12 à 14, dans lequel le premier élément d'injection (320.1) est agencé de manière à injecter de la lumière dans une première section du bord (314) de la nappe de guidage (310) de l'ensemble, et dans lequel le deuxième élément injection (320.2) est agencé de manière à injecter de la lumière dans une deuxième section du bord de la nappe de guidage flexible, une première partie (315.1) de la nappe de guidage flexible située en regard de la première section du bord étant gravée selon le premier motif (316.1), et une deuxième partie (315.2) de la nappe de guidage flexible située en regard de la deuxième section du bord étant gravée selon le deuxième motif (316.2).

16. Equipement intérieur selon l'une des revendications 12 à 14, dans lequel l'ensemble comprend au moins une première et une deuxième nappes de guidage flexibles (410.1; 410.2; 510.1; 510.2), le premier motif (416.1) étant gravé dans la première nappe de guidage flexible et le deuxième motif (416.2) étant gravé dans la deuxième nappe de guidage flexible, le premier élément d'injection (420.1; 520.1) étant agencé de manière à injecter de la lumière dans un bord de la première nappe de guidage flexible et le deuxième élément d'injection (420.2; 520.2) étant agencé de manière à injecter de la lumière dans un bord de la deuxième nappe de guidage flexible.

17. Equipement intérieur selon la revendication 16, dans lequel les premières et deuxièmes nappes de guidage (410.1; 410.2) sont superposées dans le module lumineux (400), afin de projeter les premier et deuxième motifs (416.1; 416.2) dans une zone commune du module lumineux.

18. Equipement intérieur selon la revendication 16, dans lequel les première et deuxième nappes de guidage flexibles (510.1; 510.2) sont placées l'une à côté de l'autre de manière à projeter les premier et deuxième motifs à des positions distinctes.

19. Equipement intérieur selon la revendication 18, dans lequel l'ensemble comprend plus de deux nappes de guidage flexibles (510.1; 510.2) placées les unes à côté des autres de manière à former une matrice de nappes de guidage flexibles, chaque nappe de guidage flexible étant associée à un élément d'injection de lumière (520.1; 520.2) apte à injecter de la lumière dans un bord de la nappe de guidage flexible et chaque nappe de guidage flexible ayant au moins un motif gravé dans ladite nappe.

20. Equipement intérieur selon la revendication 4 et l'une des revendications 12 à 19, dans lequel l'élément de contrôle (640) est apte à contrôler ladite au moins une source (330.1; 330.2; 430.1; 430.2; 530; 530.2) afin de projeter sélectivement de la lumière selon le premier motif (316.1; 416.1) et selon le deuxième motif (316.2; 416.2).

21. Equipement intérieur selon l'une des revendications précédentes, dans lequel l'équipement intérieur (600) est un tableau de bord de véhicule automobile.

22. Equipement intérieur selon l'une des revendications 1 à 21, dans lequel l'équipement intérieur (600) est un siège pour véhicule automobile, un toit pour véhicule automobile ou une plage arrière pour véhicule automobile.

23. Equipement intérieur selon l'une des revendications précédentes, dans lequel chaque élément d'injection (120; 320.1;320.2; 420.1; 420.2; 520.1; 520.2) comprend une pluralité de guides d'injection (123), chaque guide d'injection étant apte à recevoir de la lumière d'une extrémité du guide et à guider la lumière à une position longitudinale donnée de l'élément d'injection, les positions longitudinales des guides d'injection étant toutes différentes de manière à distribuer la lumière longitudinalement dans l'élément d'injection.

## Patentansprüche

1. Innenausstattung (600) für ein Kraftfahrzeug, wobei die Ausstattung eine Außenfläche (620) umfasst, auf der ein Lichtmodul (100, 300; 400; 500) angeordnet ist, wobei das Lichtmodul umfasst:
- eine Anordnung aus mindestens einer flexiblen Führungsschicht (110; 310; 410.1; 410.2; 510.1; 510.2), wobei jede flexible Führungsschicht der Anordnung geeignet ist, Lichtstrahlen durch mindestens eine Kante (114; 314) der flexiblen Führungsschicht zu empfangen und die Lichtstrahlen in einer Richtung zurückzuwerfen, die im Wesentlichen senkrecht zu einer Oberfläche der flexiblen Führungsschicht ist, gemäß mindestens einem in die flexible Führungsschicht eingravierten Muster (630);
- mindestens ein Lichtinjektionselement (120; 320.1; 320.2; 420.1; 420.2; 520.1; 520.2), das eine Eingangsfläche (121) umfasst, die geeignet ist, Licht zu empfangen, und eine Ausgangsfläche (122), die geeignet ist, das Licht in die Anordnung aus mindestens einer flexiblen Führungsschicht zu verteilen;
- mindestens eine Lichtquelle (130; 330.1; 330.2; 430.1; 430.2; 530; 530.2), die geeignet ist, Licht in das mindestens eine Lichtinjektionselement einzuspeisen.

2. Innenausstattung nach Anspruch 1, ferner umfassend eine taktile Schicht (610), die geeignet ist, eine taktile Eingabe eines Benutzers zu empfangen, wobei die taktile Schicht zwischen der Außenfläche (620) der Ausstattung und dem Lichtmodul (100, 300; 400; 500) oder unter der Außenfläche der Ausstattung angeordnet ist.

3. Innenausstattung nach Anspruch 2, bei der die taktile Schicht (610) eine kapazitive Schicht ist.

4. Innenausstattung nach einem der vorhergehenden Ansprüche, ferner umfassend ein Steuerelement (640), das geeignet ist, die mindestens eine Lichtquelle (130; 330.1; 330.2; 430.1; 430.2; 530; 530.2) zu steuern.

5. Innenausstattung nach Anspruch 4 und nach Anspruch 2 oder 3, bei der das Steuerelement (640) geeignet ist, taktile Eingabedaten von der taktilen Schicht (610) zu empfangen, und konfiguriert ist, die mindestens eine Lichtquelle (130; 330.1; 330.2; 430.1; 430.2; 530; 530.2) in Abhängigkeit von den taktilen Eingabedaten zu steuern.

6. Innenausstattung nach Anspruch 5, bei der das Lichtmodul (100; 300; 400; 500) geeignet ist, mindestens ein Symbol (631; 632) in einem bestimmten Bereich des Lichtmoduls aus dem Muster jeder flexiblen Führungsschicht der Anordnung anzuzeigen, und bei der ein taktiler Bereich der taktilen Schicht (610) gegenüber dem bestimmten Bereich des Lichtmoduls geeignet ist, eine taktile Eingabe zu empfangen, um taktile Eingabedaten in Abhängigkeit von dem taktilen Bereich zu erzeugen.

7. Innenausstattung nach Anspruch 6, bei der das Lichtmodul (100; 300; 400; 500) geeignet ist, mindestens ein erstes Symbol (631) in einem ersten bestimmten Bereich des Lichtmoduls und mindestens ein zweites Symbol (632) in einem zweiten bestimmten Bereich des Lichtmoduls aus dem Muster (630) jeder flexiblen Führungsschicht der Anordnung anzuzeigen, und bei der ein erster taktiler Bereich der taktilen Schicht (610) dem ersten bestimmten Bereich des Lichtmoduls gegenüberliegt und ein zweiter taktiler Bereich der taktilen Schicht dem zweiten bestimmten Bereich des Lichtmoduls gegenüberliegt, wobei ein erstes taktiles Eingabedatum von der taktilen Schicht beim Empfang einer ersten taktilen Eingabe im ersten taktilen Bereich erzeugt wird, und wobei ein zweites taktiles Eingabedatum von der taktilen Schicht beim Empfang einer zweiten taktilen Eingabe im zweiten taktilen Bereich erzeugt wird.

8. Innenausstattung nach einem der Ansprüche 4 bis 7, bei der das Lichtmodul (100; 300; 400; 500) eine flexible Führungsschicht (110; 310; 410.1; 410.2; 510.1; 510.2), ein Lichtinjektionselement (120; 320.1; 320.2; 420.1; 420.2; 520.1; 520.2) und eine Lichtquelle (130; 330.1; 330.2; 430.1; 430.2; 530; 530.2) umfasst, bei der die Lichtquelle geeignet ist, Licht in einem ersten Wellenlängenbereich und in einem zweiten Wellenlängenbereich, der sich vom ersten Bereich unterscheidet, zu projizieren, wobei das Steuerelement (640) geeignet ist, die Lichtquelle zu steuern, um Licht im ersten Bereich oder im zweiten Bereich zu projizieren.

9. Innenausstattung nach Anspruch 8, bei der das Steuerelement (640) geeignet ist, die Lichtquelle (130; 330.1; 330.2; 430.1; 430.2; 530; 530.2) zu steuern, um Licht im ersten Bereich oder im zweiten Bereich in Abhängigkeit von einem Animationsbefehl zu projizieren.

10. Innenausstattung nach Anspruch 8 oder 9 und nach einem der Ansprüche 5 bis 7, bei der das Steuerelement (640) geeignet ist, die Lichtquelle (130; 330.1; 330.2; 430.1; 430.2; 530; 530.2) zu steuern, um Licht im ersten Bereich oder im zweiten Bereich in Abhängigkeit von den taktilen Eingabedaten zu projizieren.

11. Innenausstattung nach einem der Ansprüche 8 bis 10, bei der das Lichtmodul (100; 300) eine einzige flexible Führungsschicht (110; 310) umfasst.

12. Innenausstattung nach einem der Ansprüche 1 bis 10, bei der das Lichtmodul (300; 400; 500) ein erstes Injektionselement (320.1; 420.1; 520.1) und ein zweites Injektionselement (320.2; 420.2; 520.2) umfasst, bei der die mindestens eine Quelle (330.1; 330.2; 430.1; 430.2; 530; 530.2) geeignet ist, selektiv Licht in das erste Injektionselement und in das zweite Injektionselement einzuspeisen, und bei der das erste Lichtinjektionselement und die Anordnung aus mindestens einer flexiblen Führungsschicht (310; 410.1; 410.2; 510.1; 510.2) so angeordnet sind, dass Licht gemäß dem ersten Muster projiziert wird, und bei der das zweite Lichtinjektionselement und die Anordnung aus mindestens einer flexiblen Führungsschicht so angeordnet sind, dass Licht gemäß dem zweiten Muster projiziert wird.

13. Innenausstattung nach Anspruch 12, umfassend eine erste Lichtquelle (330.1; 430.1; 530.1), die geeignet ist, Licht in das erste Lichtinjektionselement (320.1; 420.1; 520.1) einzuspeisen, und eine zweite Lichtquelle (330.2; 430.2; 530.2), die geeignet ist, Licht in das zweite Lichtinjektionselement (320.2; 420.2; 520.2) einzuspeisen.

14. Innenausstattung nach Anspruch 13, bei der die erste Lichtquelle (330.1; 430.1; 530.1) geeignet ist, Licht in einem ersten Wellenlängenbereich zu erzeugen, und bei der die zweite Lichtquelle (330.2; 430.2; 530.2) geeignet ist, Licht in einem zweiten Wellenlängenbereich zu erzeugen, der sich vom ersten Bereich unterscheidet.

15. Innenausstattung nach einem der Ansprüche 12 bis 14, bei der das erste Injektionselement (320.1) so angeordnet ist, dass es Licht in einen ersten Abschnitt der Kante (314) der Führungsschicht (310) der Anordnung einspeist, und bei der das zweite Injektionselement (320.2) so angeordnet ist, dass es Licht in einen zweiten Abschnitt der Kante der flexiblen Führungsschicht einspeist, wobei ein erster Teil (315.1) der flexiblen Führungsschicht, der dem ersten Abschnitt der Kante gegenüberliegt, gemäß dem ersten Muster (316.1) eingraviert ist, und ein zweiter Teil (315.2) der flexiblen Führungsschicht, der dem zweiten Abschnitt der Kante gegenüberliegt, gemäß dem zweiten Muster (316.2) eingraviert ist.

16. Innenausstattung nach einem der Ansprüche 12 bis 14, bei der die Anordnung mindestens eine erste und eine zweite flexible Führungsschicht (410.1; 410.2; 510.1; 510.2) umfasst, wobei das erste Muster (416.1) in die erste flexible Führungsschicht eingraviert ist und das zweite Muster (416.2) in die zweite flexible Führungsschicht eingraviert ist, wobei das erste Injektionselement (420.1; 520.1) so angeordnet ist, dass es Licht in eine Kante der ersten flexiblen Führungsschicht einspeist, und das zweite Injektionselement (420.2; 520.2) so angeordnet ist, dass es Licht in eine Kante der zweiten flexiblen Führungsschicht einspeist.

17. Innenausstattung nach Anspruch 16, bei der die erste und zweite Führungsschicht (410.1; 410.2) im Lichtmodul (400) übereinander angeordnet sind, um das erste und zweite Muster (416.1; 416.2) in einem gemeinsamen Bereich des Lichtmoduls zu projizieren.

18. Innenausstattung nach Anspruch 16, bei der die erste und zweite flexible Führungsschicht (510.1; 510.2) nebeneinander platziert sind, um das erste und zweite Muster an verschiedenen Positionen zu projizieren.

19. Innenausstattung nach Anspruch 18, bei der die Anordnung mehr als zwei flexible Führungsschichten (510.1; 510.2) umfasst, die nebeneinander platziert sind, um eine Matrix aus flexiblen Führungsschichten zu bilden, wobei jede flexible Führungsschicht einem Lichtinjektionselement (520.1; 520.2) zugeordnet ist, das geeignet ist, Licht in eine Kante der flexiblen Führungsschicht einzuspeisen, und wobei jede flexible Führungsschicht mindestens ein in die Schicht eingravierten Muster aufweist.

20. Innenausstattung nach Anspruch 4 und einem der Ansprüche 12 bis 19, bei der das Steuerelement (640) geeignet ist, die mindestens eine Quelle (330.1; 330.2; 430.1; 430.2; 530; 530.2) zu steuern, um selektiv Licht gemäß dem ersten Muster (316.1; 416.1) und gemäß dem zweiten Muster (316.2; 416.2) zu projizieren.

21. Innenausstattung nach einem der vorhergehenden Ansprüche, bei der die Innenausstattung (600) ein Armaturenbrett eines Kraftfahrzeugs ist.

22. Innenausstattung nach einem der Ansprüche 1 bis 21, bei der die Innenausstattung (600) ein Sitz für ein Kraftfahrzeug, ein Dach für ein Kraftfahrzeug oder eine Hutablage für ein Kraftfahrzeug ist.

23. Innenausstattung nach einem der vorhergehenden Ansprüche, bei der jedes Injektionselement (120; 320.1; 320.2; 420.1; 420.2; 520.1; 520.2) eine Vielzahl von Injektionsleitern (123) umfasst, wobei jeder Injektionsleiter geeignet ist, Licht von einem Ende des Leiters zu empfangen und das Licht an eine bestimmte Längsposition des Injektionselements zu leiten, wobei die Längspositionen der Injektionsleiter alle verschieden sind, um das Licht längs im Injektionselement zu verteilen.

## Claims

1. Interior equipment (600) for an automotive vehicle, said equipment comprising an external surface (620) on which a luminous module (100, 300; 400; 500) is arranged, the luminous module comprising:
- an assembly of at least one flexible guide sheet (110; 310; 410.1; 410.2; 510.1; 510.2), each flexible guide sheet of the assembly being adapted to receive light rays via at least one edge (114; 314) of said flexible guide sheet and to reflect the light rays in a direction substantially normal to a surface of the flexible guide sheet according to at least one pattern (630) etched in said flexible guide sheet;
- at least one light injection element (120; 320.1; 320.2; 420.1; 420.2; 520.1; 520.2) comprising an input surface (121) adapted to receive light and an output surface (122) to distribute the light in the assembly of at least one flexible guide sheet;
- at least one light source (130; 330.1; 330.2; 430.1; 430.2; 530; 530.2) adapted to inject light into said at least one light injection element.

2. The interior equipment as claimed in claim 1, further comprising a touch-sensitive layer (610) adapted to receive a touch input from a user, said touch-sensitive layer is located between the external surface (620) of the equipment and the luminous module (100, 300; 400; 500), or under the external surface of the equipment.

3. The interior equipment as claimed in claim 2, wherein the touch-sensitive layer (610) is a capacitive layer.

4. The interior equipment as claimed in one of the preceding claims, further comprising a control element (640) adapted to control said at least one light source (130; 330.1; 330.2; 430.1; 430.2; 530; 530.2).

5. The interior equipment as claimed in claim 4, and as claimed in claim 2 or 3, wherein the control element (640) is adapted to receive touch input data from the touch-sensitive layer (610) and is configured to control said at least one light source (130; 330.1; 330.2; 430.1; 430.2; 530; 530.2) as a function of the touch input data.

6. The interior equipment as claimed in claim 5, wherein the luminous module (100; 300; 400; 500) is adapted to display at least one symbol (631; 632) in a given area of the luminous module on the basis of the pattern of each flexible guide sheet of the assembly, and wherein a touch-sensitive area of the touch-sensitive layer (610) opposite the given area of the luminous module is adapted to receive a touch input to generate touch input data as a function of said touch-sensitive area.

7. The interior equipment as claimed in claim 6, wherein the luminous module (100; 300; 400; 500) is adapted to display at least a first symbol (631) in a first given area of the luminous module and at least a second symbol (632) in a second given area of the luminous module, on the basis of the pattern (630) of each flexible guide sheet of the assembly, and wherein a first touch-sensitive area of the touch-sensitive layer (610) is opposite the first given area of the luminous module and a second touch-sensitive area of the touch-sensitive layer is opposite the second given area of the luminous module, wherein a first touch input datum is generated by the touch-sensitive layer upon receipt of a first touch input in the first touch-sensitive area, and wherein a second touch input datum is generated by the touch-sensitive layer upon receipt of a second touch input in the second touch-sensitive area.

8. The interior equipment as claimed in one of claims 4 to 7, wherein the luminous module (100; 300; 400; 500) comprises a flexible guide sheet (110; 310; 410.1; 410.2; 510.1; 510.2), a light injection element (120; 320.1;320.2; 420.1; 420.2; 520.1; 520.2) and a light source (130; 330.1; 330.2; 430.1; 430.2; 530; 530.2), wherein the light source is adapted to project light in a first wavelength range and in a second wavelength range distinct from the first range, said control element (640) being adapted to control the light source to project light in the first range or in the second range.

9. The interior equipment as claimed in claim 8, wherein the control element (640) is adapted to control the light source (130; 330.1; 330.2; 430.1; 430.2; 530; 530.2) to project light in the first range or in the second range as a function of an animation command.

10. The interior equipment as claimed in claims 8 or 9, and as claimed in one of claims 5 to 7, wherein the control element (640) is adapted to control the light source (130; 330.1; 330.2; 430.1; 430.2; 530; 530.2) to project light in the first range or in the second range as a function of the touch input data.

11. The interior equipment as claimed in one of claims 8 to 10, wherein the luminous module (100; 300) comprises a single flexible guide sheet (110; 310).

12. The interior equipment as claimed in one of claims 1 to 10, wherein the luminous module (300; 400; 500) comprises a first injection element (320.1; 420.1; 520.1) and a second injection element (320.2; 420.2; 520.2), wherein said at least one source (330.1; 330.2; 430.1; 430.2; 530; 530.2) is adapted to selectively inject light into the first injection element and into the second injection element, and wherein the first light injection element and the assembly of at least one flexible guide sheet (310; 410.1; 410.2; 510.1; 510.2) are arranged in such a way as to project light according to the first pattern and wherein the second light injection element and the assembly of at least one flexible guide sheet are arranged in such a way as to project light according to the second pattern.

13. The interior equipment as claimed in claim 12, comprising a first light source (330.1; 430.1; 530.1) adapted to inject light into the first light injection element (320.1; 420.1; 520.1) and a second light source (330.2; 430.2; 530.2) adapted to inject light into the second light injection element (320.2; 420.2; 520.2).

14. The interior equipment as claimed in claim 13, wherein the first light source (330.1; 430.1; 530.1) is adapted to generate light in a first wavelength range and wherein the second light source is adapted to generate light in a second wavelength range (330.2; 430.2; 530.2), different to the first range.

15. The interior equipment as claimed in one of claims 12 to 14, wherein the first injection element (320.1) is arranged in such a way as to inject light into a first section of the edge (314) of the guide sheet (310) of the assembly, and wherein the second injection element (320.2) is arranged in such a way as to inject light into a second section of the edge of the flexible guide sheet, a first portion (315.1) of the flexible guide sheet located opposite the first section of the edge being etched according to the first pattern (316.1), and a second portion (315.2) of the flexible guide sheet located opposite the second section of the edge being etched according to the second pattern (316.2).

16. The interior equipment as claimed in one of claims 12 to 14, wherein the assembly comprises at least a first and a second flexible guide sheets (410.1; 410.2; 510.1; 510.2), the first pattern (416.1) being etched in the first flexible guide sheet and the second pattern (416.2) being etched in the second flexible guide sheet, the first injection element (420.1; 520.1) being arranged in such a way as to inject light into an edge of the first flexible guide sheet and the second injection element (420.2; 520.2) being arranged in such a way as to inject light into an edge of the second flexible guide sheet.

17. The interior equipment as claimed in claim 16, wherein the first and second guide sheets (410.1; 410.2) are superimposed in the luminous module (400), in order to project the first and second patterns (416.1; 416.2) in a common area of the luminous module.

18. The interior equipment as claimed in claim 16, wherein the first and second flexible guide sheets (510.1; 510.2) are placed next to one another in such a way as to project the first and second patterns at distinct positions.

19. The interior equipment as claimed in claim 18, wherein the assembly comprises more than two flexible guide sheets (510.1; 510.2) placed next to one another in such a way as to form a matrix of flexible guide sheets, each flexible guide sheet being associated with a light injection element (520.1; 520.2) adapted to inject light into an edge of the flexible guide sheet and each flexible guide sheet having at least one pattern etched in said sheet.

20. The interior equipment as claimed in claim 4 and one of claims 12 to 19, wherein the control element (640) is adapted to control said at least one source (330.1; 330.2; 430.1; 430.2; 530; 530.2) in order to selectively project light according to the first pattern (316.1; 416.1) and according to the second pattern (316.2; 416.2).

21. The interior equipment as claimed in one of the preceding claims, wherein the interior equipment (600) is an automotive vehicle dashboard.

22. The interior equipment as claimed in one of claims 1 to 21, wherein the interior equipment (600) is an automotive vehicle seat, an automotive vehicle roof or an automotive vehicle rear shelf.

23. The interior equipment as claimed in one of the preceding claims, wherein each injection element (120; 320.1; 320.2; 420.1; 420.2; 520.1; 520.2) comprises a plurality of injection guides (123), each injection guide being adapted to receive light from one end of the guide and to guide the light to a given longitudinal position on the injection element, the longitudinal positions of the injection guides all being different so as to distribute the light longitudinally in the injection element.
